Europäisches Patentamt

European Patent Office

Office européen des brevets

(19)

(11) Publication number: **0 025 217**
**B1**

# EUROPEAN PATENT SPECIFICATION

(45) Date of publication of patent specification: **28.03.84**

(51) Int. Cl.³: **H 04 L 7/02, H 04 B 7/185**

(21) Application number: **80105254.9**

(22) Date of filing: **03.09.80**

(54) **Clock recovery circuit for burst communications systems.**

(30) Priority: **03.09.79 JP 112544/79**

(43) Date of publication of application:
**18.03.81 Bulletin 81/11**

(45) Publication of the grant of the patent:
**28.03.84 Bulletin 84/13**

(84) Designated Contracting States:
**DE FR GB NL SE**

(56) References cited:
**DE - A - 2 139 404**
**DE - A - 2 710 270**
**DE - A - 2 735 053**
**DE - A - 2 907 182**
**FR - A - 2 164 641**
**US - A - 3 671 876**
**US - A - 4 021 609**
**US - A - 4 131 856**

(73) Proprietor: **Nippon Telegraph and Telephone Public Corporation**
**1-6 Uchisaiwai-cho, 1-chome Chiyoda-ku Tokyo 100 (JP)**
Proprietor: **NEC CORPORATION**
**33-1, Shiba 5-chome, Minato-ku Tokyo 108 (JP)**

(72) Inventor: **Hata, Masahura**
**94-2-6-503,Nagasawa**
**Yokosuka-shi Kanagawa (JP)**
Inventor: **Kato, Kotaro**
**c/o Nippon Electric Co., Ltd. 33-1, Shiba-Gochome**
**Minato-ku Tokyo (JP)**

(74) Representative: **Vossius Vossius Tauchner Heunemann Rauh**
**Siebertstrasse 4 P.O. Box 86 07 67**
**D-8000 München 86 (DE)**

Clock recovery circuit for burst communications systems

The present invention relates to a clock recovery circuit for use in a burst communications system such as a time-division multiple access (TDMA) system.

On the receiver side of a TDMA communications system, for example bursts sequentially transmitted from a plurality of stations are received. In many cases, the clock frequencies of these bursts do not coincide with each other. Even when the frequencies do match with each other, the distances between the stations are not constant (for instance, it is impossible to maintain a constant distance in a TDMA system used in the mobile communications since one of the stations is moving), and clocks of bursts are usually not synchronized. The receiver side, therefore, is obliged to recover clocks per every burst and correct any errors in frequency and phase in order to obtain clocks synchronized with each burst. In this connection reference is made to Chapter 16 "Time-Division Multiple Access", pp. 243—256 of "Communications Satellite Systems", Prentice-Hall, 1978.

In the conventional clock recovery circuit, the frequency and phase corrections are achieved by relying on a single tuning circuit or phase-locked loop (PLL), which requires a transient response time for correction. As the clock component extracted from a burst received in many cases contains such unnecessary components as thermal noise, etc., it is necessary to improve the S/N ratio of the recovered clock with a narrower frequency band width of the single tuning circuit or PLL.

The transient response time is inversely proportional to the band width, so that the band width which has been narrowed for improving S/N ratio will increase the transient response time. During such a response time, clocks are not sufficiently recovered and therefore data cannot be demodulated, thus deteriorating the line efficiency. In other words, the clock recovery faces the conflicting problems of improving the S/N ratio of recovered clocks and improving the line efficiency. It is not easy to satisfy the two demands. Thus, the conventional clock recovery circuit has these seemingly inherent problems.

The US—A—4 131 856 discloses the electrical circuit arrangements for synchronizing electrical signals such as trains of data pulses, and teaches a synchronizing circuit including a digital phase-locked loop (DPLL). This DPLL has an averager for averaging the signal representative of the phase displacement between pulses of one train and pulses of another train over the eight-clock-pulse period. The known synchronizing circuit operates on sequential intervals of the bit stream and needs a certain transient time.

The DE—A—2 907 182 relates to a radio signal transmission system and teaches an improved mobile station utilizing the recovered clock time base as the transmit clock time base. Neither the mobile station nor the base station have a memory circuit and therefore neither of these stations can utilize the clock phase information of an immediately preceding burst for the clock recovery of an incoming burst from the same station.

The US—A—4 021 609 relates to a system for regenerating and processing a data from a burst signal which is received in a receiving terminal and particularly to a circuit in a PCM-TDMA system for processing said data by using a local clock. The US—A—4 021 609 teaches a TDMA clock synchronizing circuit with which a local clock is synchronized with the received burst clock. The received burst clock is supplied from a clock recovery circuit in a four-phase PSK demodulator. This clock recovery circuit is composed of a phase synchronization loop or a narrow band-pass filter. This means that the TDMA clock synchronizing circuit also needs the above-mentioned transient time.

The object of the present invention is to offer a clock recovery circuit which obviates the above-mentioned difficulties, eliminates the transient response time, and which may arbitrarily improve the S/N ratio.

In the clock recovery circuit according to the present invention, an extremely small phase deviation of clock timings of the bursts which are transmitted from the same station and arrive at substantially the same time is noted and by using the clocks recovered from the timing information of the preceding burst as the sampling signal for the ensuing burst, the transient time required for clock recovery in the conventional device is omitted. At the same time, the clock recovery circuit of the present invention averages the timing data obtained from the preceding burst and imparts the filter characteristic equivalent to that of the narrow band, thereby improving the S/N of the recovered clocks.

The present invention is characterized by the features of the claims. The present invention is explained in further detail referring to the drawings, wherein:

Fig. 1 is a block diagram illustrating the principal part of the demodulator section on the receiving side in a burst communications system;

Fig. 2 is a block diagram illustrating an embodiment of the clock recovery circuit composition in accordance with the present invention; and

Figs. 3A to 3C and 4A to 4H are diagrams to explain the timing of the operation shown in Fig. 2.

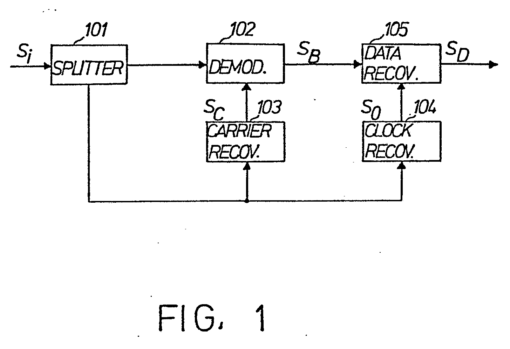

In Fig. 1, a received modulated wave $S_i$ is split by a splitter circuit 101 and supplied to a demodulating circuit 102, carrier recovery circuit 103 and clock recovery circuit 104. The demodulator circuit 102 synchronously detects the received modulated signal $S_i$ with a received carrier $S_c$ from the carrier recovery circuit 103, and then supplies a base-band signal $S_B$ as its output. A data recovery circuit 105 recognizes the base-band signal $S_B$ in conformity with the timing of a recovered clock $S_0$ from the clock recovery circuit 104, and thereby produces data $S_D$. A demodulator like the one illustrated in Fig. 1 is described, with reference to a quadraphase PSK modulated wave, in S. Yokoyama et al, "The Design of a PSK Modem for the Telesat TDMA System", ICC 75, June 16—18, San Francisco.

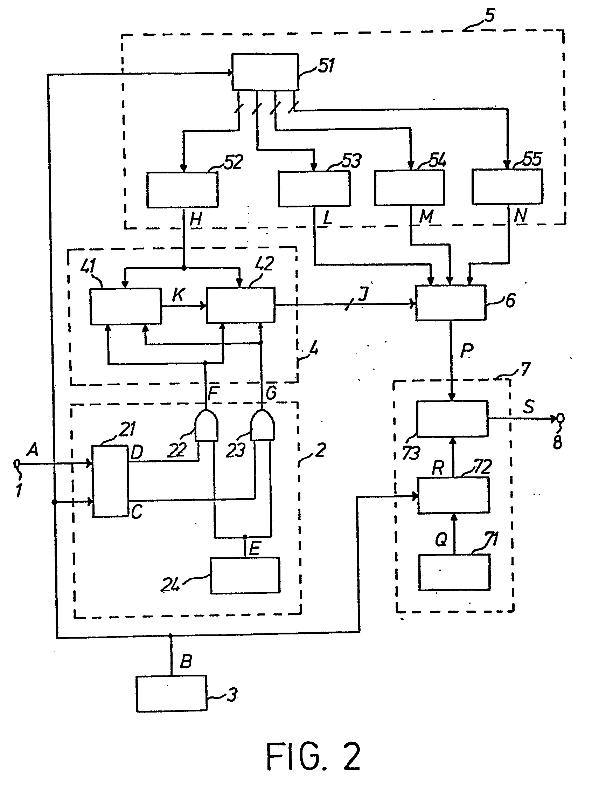

In Fig. 2, a signal A containing clock components supplied from an outside source is applied to a signal input terminal 1 and becomes one of the input signals at a phase comparator 21 in a phase difference detection circuit 2. With a TDMA system, for example, the input clock components are extracted from the bursts from a plurality of independent stations. An output B of an oscillator 3 is supplied to the other input of the phase comparator 21. The frequency $(f_1)$ of the oscillation output B is selected to be equal or extremely close to the frequency of the input signal A.

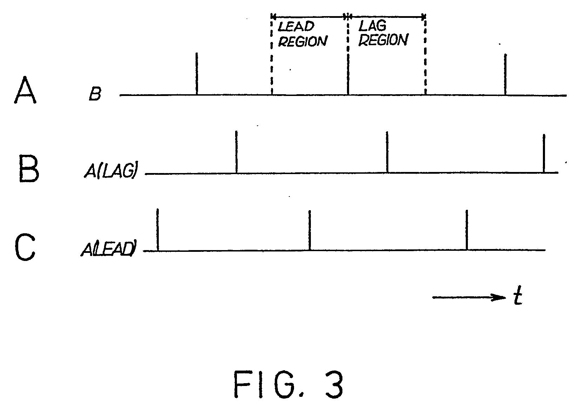

The phase difference detection circuit 2 outputs the phase difference between the input signal A containing a clock component and the oscillator output B to an averaging circuit 4 in the following manner at each clock timing. The phase comparator 21 generates lagging signal D and leading signal C corresponding to the lagging and leading regions illustrated in Fig. 3A and proportionate to the phase difference between the two input signals. The reference for lagging and leading is determined by the oscillator output B. Fig. 3B illustrates where the input signal A is lagging behind the signal B whereas Fig. 3C shows the reverse case. The lagging signal D is led to a gate 22 and the leading pulse signal C to a gate 23, respectively, to control an output E of an oscillator 24. The frequency $f_2$ for the output E is set at:

$$f_2 = N_1 \cdot f_1$$

wherein $f_1$ is the frequency of the oscillator 3 and $N_1$ is a positive integer. With the construction of circuit 2, outputs F and G from the gates 22 and 23 contain the number of pulses proportionate to the lagging and the leading amounts, respectively.

In the present embodiment, both lagging and leading are limited to the maximum $\pi$. Accordingly, the number of pulses from the outputs F and G do not exceed $N_1/2$ at maximum.

The averaging circuit 4 averages the phase difference pulses (pulses of the signal F or G) for a predetermined interval designated by a control signal H from a control circuit 5 and supplies signal J, which represents the number of the average phase differences, to a memory circuit 6. The average circuit 4 may comprise two up-down counters 41 and 42. The counter 41 has a period of $N_2$, $N_2$ being a positive integer representing the number of intervals of the clock timings to be averaged. The counter 42 has a period of $N_1$ and is connected to the counter 41 by the carry signal K. A counter which has a period of $N_2 \cdot N_1$ is obtained by these counters.

The two counters are reset, immediately before the clock interval $N_2$ which is to be averaged, by the control signal H from the control circuit 5 and start counting from the initial value zero. Therefore, when counting is started and, for instance, the lagging signal F is the input, counting goes up from the initial value 0 as 1, 2, 3 ..., and even after passing of the clock averaging period, the total count does not exceed a value given by:

$$N_2 \cdot \frac{N_1}{2}$$

Conversely, when the leading signal G is input, the counter counts down from the initial value 0 to $N_2 \cdot N_1 - 1$, $N_2 \cdot N_1 - 2$, $N_2 \cdot N_1 - 3, \ldots$; and the total count does not go down beyond:

$$N_2 \cdot \frac{N_1}{2}$$

Accordingly, when $N_1$ is selected to be $2^a$ (wherein $a$ is a positive integer) as in $N_1 = 2^5$ and $N_2 = 2^8$, it is possible to judge whether the input signal is lagging or leading by seeing whether the most significant digit (abbreviated as MSD) of the counter 42 is "0" or "1", representing lagging or leading, respectively.

When the average phase error between the input signal A and the output B of the oscillator 3 is E ($E \leq N_1/2$), the value E is not necessarily obtained correctly in the phase comparison of respective clock intervals, but can deviate significantly. However, the mean value of the phase error approaches E if a sufficiently large value is set for $N_2$, and the sum of phase errors for $N_2$ intervals becomes approximately

$$N_2 \cdot E$$

Then the content of the counter 42 of this embodiment equals the mean value of the phase errors of $N_2$ intervals without any modifications.

When $N_1 = 2^5$ and $N_2 = 2^8$, the content of the counter 42 directly represents the mean value E if lagging status (MSD=0). If leading status (MSD=1), the mean value E is represented by:

$$N_1 - (\text{the content of the counter 42})$$

However, the leading status may be considered an extension of the lagging status. That is, the leading amount E may be represented as the lagging amount of:

$$2\pi - E$$

Therefore, if all the phase errors are reevaluated with the lagging amount, the content of the counter 42 in either case will give the mean phase error. The content of the counter 42 which is the mean phase error is stored at a corresponding address in the memory circuit 6 immediately after the respective averaging interval is over, and read out immediately before the next burst arrives to be led to a phase shift circuit 7.

In the embodiment, the averaging circuit 4 comprises two-stage counters for facilitating the construction of a divider circuit, and it will be understood that a divider circuit commonly used in the art may be employed.

The control circuit 5 is driven by the output B of the oscillator 3, and generates the signal H to give the averaging interval for the averaging circuit 4, a write-in signal L, a read-out signal M and an address designating signal N for the memory circuit 6. Such a control circuit 5 may comprise a frame counter 51 driven by the output B of the oscillator 3, decoders 52 to 54 generating control signals H, L and M by decoding the output from the frame counter 51, based on a predetermined timing, and a decoder 55 to obtain address signal N.

An oscillator 71 inside the phase shift circuit 7 has substantially the same frequency $(f_2 = N_1 \cdot f_1)$ as the oscillator 24. The output Q of the oscillator 71 actuates a counter 72 having a period of $N_1$. The counter 72 is reset by the output B of the oscillator 3. Accordingly, the content of the counter 72 represents the lagging amount from the output B of the oscillator 3. On the other hand, the output P of the memory circuit 6 represents the lagging amount of the input signal A of the preceding burst as compared to the output B of the oscillator 3; thus, if the output P and the output R are led to a coincidence circuit 73 to coincide with each other, the pulse generated at the coincident point becomes the recovered clock being sought, and is led to the output terminal 8 as a recovered output clock S.

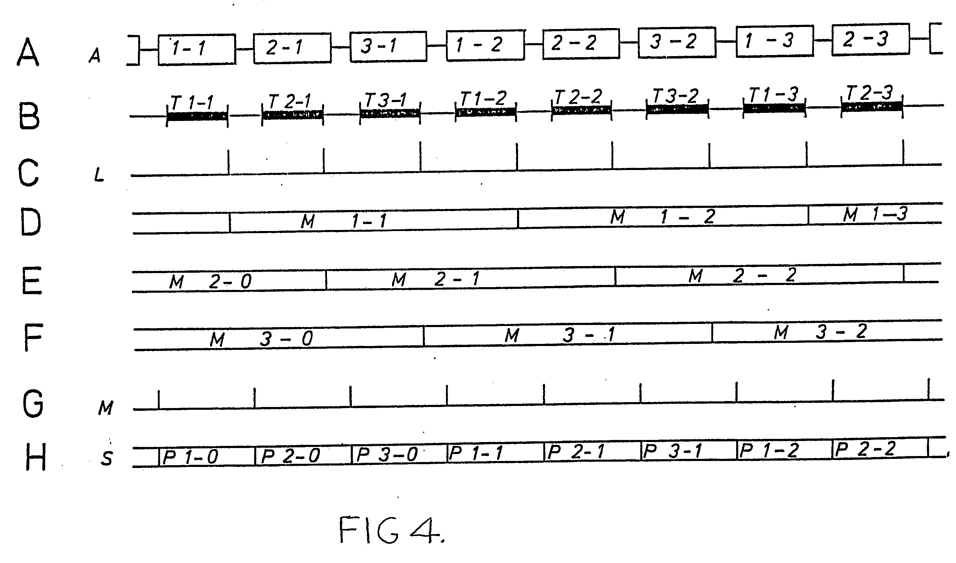

The operation described above is now discussed in greater detail making reference to the timing diagram of Figs. 4A to 4H. Fig. 4A shows the clock component applied to the input terminal 1 of Fig. 2 (provided, however, that in this case the number of stations is limited to three); Fig. 4B, the mean time of the averaging circuit 4 of Fig. 2; Fig. 4C, the write-in control signal L for the memory circuit 6 shown in Fig. 2; Fig. 4D, the memory content stored at the address designated for the burst transmitted by a first station in the memory circuit 6 of Fig. 2; Fig. 4E, the memory content stored at the address designated for the burst transmitted from a second station; Fig. 4F, the memory content stored at the address designated for the burst from a third station; Fig. 4G, the read-out control signal M for the memory circuit 6 in Fig. 2; and Fig. 4H, the phase of the output S of the clock recovery circuit which is the output of the phase shift circuit 7 of Fig. 2.

Fig. 4A shows an example of bursts from each of the three stations being repeated over a predetermined period; character A-b represents the clock component of the b-th burst from the A-th station (A: 1,2 and 3, and b is a positive integer). In Fig. 4B, the mean time of the averaging circuit 4 represented by the output H of the control circuit 5 in Fig. 2 is indicated by bold lines. The character TA-b shows the averaging time for the b-th burst from the A-th station. Though TA-b indicates that the averaging is performed over most of the length of each burst received, it is possible to make an arbitrary selection within the burst length corresponding to the particular time period, and it may extend over a plurality of bursts transmitted by the same station. Fig. 4C is the write-in control signal L for the memory circuit 6 which is an output of the control circuit 5 of Fig. 2, and since its timing has been selected at the time the averaging is completed, the output J of the averaging circuit 4 is written in the memory area addressed by the address signal N from the control circuit 5 only after the averaging has been completed.

Figs. 4D to 4F, respectively, show memory contents stored in the memory circuit 6 at the memory area corresponding to the 1st, 2nd and 3rd station, and MA-b represents the memory content stored for the b-th burst from the A-th station. In other words, Fig. 4D is the memory content stored in the memory circuit 6 at the memory area corresponding to the burst from the 1st station, and M1—1, M1—2, M1—3 respectively indicate that only the phase differences averaged in respect of the 1st burst, 2nd burst, and 3rd burst transmitted from the 1st station are stored. Fig. 4G shows the read-out control signal M for the memory circuit 6 which is the output of the control circuit 5 in Fig. 2, and its timing is so selected to be between two successive bursts, i.e., between the preceding burst is completed and before the ensuing burst begins.

Therefore, the memory content stored in the memory circuit 6 is taken out from the memory area indicated by the output N by a signal M of the control circuit 5 as the output P and is supplied to the phase shift circuit 7. The phase for the output S of the clock recovery circuit which is the output of the phase shift circuit 7 is shown in Fig. 4H. The character PA-b represents the phase corresponding to the phase information obtained from the b-th burst from the A-th station.

As is clear from Figs. 4A-4H, the phase for the output clock S for each of the burst is the phase obtained from the preceding burst issued from the same station, and it is indicated that this phase is maintained while one burst continues. Thus, since the timing information of the preceding burst is used for the incoming burst, the same operation is performed even when there are differences between the clock frequencies of the respective bursts and the frequency of the oscillator 3 if the clock phase shift in time interval between bursts from the same station is very small.

Although the number of participating stations is assumed to be three in this embodiment, it will be understood that a completely similar operation is possible with $n$ stations (wherein $n$ is a positive integer) as long as the memory capacity corresponding to the number of stations is provided at the memory circuit. In the present embodiment, the explanation (see Fig. 4) is given by limiting the averaging time for the averaging circuit 4, although it is possible to conduct the averaging operation extending over a plurality of bursts issued from the same station. In the latter case, since other bursts would exist within the same averaging time, it is necessary to add to the averaging circuit 4 the function of the temporarily storing the value in the memory circuit 6 at the time the averaging of one burst is completed, and then reading out the value when another burst from the same station arrives, thereby continuing the averaging operation without interruption.

It is assumed that the phase comparator 21 in Fig. 2 is of the type yielding output signals F and G representing the phase lag and lead depending on the input signals. It is, however, possible to use a phase comparator of the type where the phase difference is represented only by the lagging amount with respect to the output B of the oscillator 3. In this case the output from the phase comparator 21 becomes D alone, and the up-down counters 41 and 42 for the averaging circuit 4 may be of an ordinary type. The output from the phase difference detection circuit 2 is as described above, obtained by gating the output E of the oscillator 24, but the actual counter (41 or 42) can be provided with a gate function within the counter making the gates 22 and 23 unnecessary. One oscillator may be used instead of the two oscillators 24 for the phase difference detection circuit 2 and 71 for the phase shift circuit 7. The oscillator 3 is described as being provided independently in the embodiment, but the output B may also be obtained by counting down the output of the oscillators 24 or 71 to $1/N_1$. In this case, the counter 72 may also be used as a counter for counting down.

As has been described above, the present invention offers a recovery clock of sufficient reliability from the time a burst begins to arrive because the phase difference information obtained from the bursts which have arrived previously is used for the clock recovery. Since the averaging time may be determined without considering the synchronous transcient time for the clock recovery circuit, the recovered clocks are expected to have a sufficiently high S/N ratio. Accordingly, the clock recovery circuit according to the present invention ensures a burst communications system such as TDMA with an extremely high bit rate.

## Claims

1. A clock recovery circuit for time division multiple access (TDMA) systems, comprising

a) an oscillator (3) for generating a local clock B having a frequency substantially equal to the clock frequencies of the bursts transmitted by various transmitting stations in the TDMA system;
b) a phase difference detection circuit (2) for comparing the phase of the local clock B with the phase of the clock A extracted from each of the bursts;
c) an averaging circuit (4) for averaging the detected phase differences F and G during an interval designated by a control signal H, characterized by
d) a memory circuit (6) for storing the averaged phase differences J under addresses 1—$n$ which individually identify $n$ transmitting stations in the TDMA system, $n$ being a positive integer;
e) a control circuit (5) responsive to the local clock B for generating the control signal H and the addresses 1—$n$ and reading the stored phase differences P out of the memory area in the memory circuit (6), the memory area corresponding to one of the bursts transmitted from any given station; and
(f) a phase shift circuit (7) for phase-shifting the local clock B, in response to the phase differences P, to provide a clock pulse S for the next burst transmitted from the same given station.

2. A circuit as claimed in claim 1, characterized in that the phase difference detection circuit (2) comprises:

a) a phase comparator (21) generating a leading signal C and a lagging signal D corresponding to the positive or negative phase difference, respectively, between the circuit input signal A and the output signal B of the oscillator (3);
b) an oscillator (24) with an output frequency $f_2$ which is an integral multiple $N_1 \cdot f_1$ of the frequency $f_1$ of the oscillator (3); and
c) two gates (22) and (23) with outputs F and G, respectively, wherein the number of pulses of these outputs F and G is proportional to the lagging and leading intervals of signal A versus signal B, respectively.

3. A circuit as claimed in claim 1 or 2, characterized in that the averaging circuit (4) comprises two up-down counters (41) and (42), wherein

a) the first counter (42) has a period of $N_1$; and
b) the second counter (41) has a period of $N_2$, $N_2$ being the number of clock timings to be averaged.

4. A circuit as claimed in one of claims 1 to 3, characterized in that the phase shift circuit (7) comprises

a) an oscillator (71) having substantially the same frequency as the oscillator (24);
b) a counter (72) with a period of $N_1$; and
c) a coincidence circuit (73) generating an output signal S, if a signal P from the memory circuit (6) representing the stored phase difference of the preceding burst from the same station as the incoming burst coincides with a signal R representing the lagging amount from the output B of oscillator (3).

**Patentansprüche**

1. Taktrückgewinnungsschaltung für Systeme mit Zeitvielfachzugriff (TDMA) mit

a) einem Oscillator (3) zum Erzeugen eines lokalen Taktes B, dessen Frequenz im wesentlichen gleich den Taktfrequenzen der von verschiedenen Übertragungsstationen im TDMA-System übertragenen Informationspakete ist,
b) einem Phasendifferenzdetektorschaltkreis (2) zum Vergleichen der Phase des lokalin Taktes B mit der Phase des aus jedem Paket extraheirten Taktes A,
c) einem Mittelungsschaltkeis (4) zum Ausmitteln der festgestellten Phasendifferenzen F und G während eines durch ein Steuersignal H bestimmten Intervalls, gekennzeichnet durch
d) einen Speicherschaltkreis (6) zum Speichern der gemittelten Phasendifferenzen J unter Adressen 1—$n$, die einezeln $n$ Übertragungsstationen im TDMA-System identifizieren, wobei $n$ eine positive ganze Zahl ist,
e) einen auf den lokalen Takt B ansprechenden Steuerschaltkreis (5) zum Erzeugen des Steuersignals H und der Adressen 1—$n$ und zum Auslesen der gespeicherten Phasendifferenzen P aus dem Speicherbereich im Speicherschaltkreis (6), wobei der Speicherbereich einem der von einer bestimmten Station übertragenen Pakete entspricht, und durch
f) einen Phasenschiebeschaltkreis (7) zum Phasenverschieben des lokalen Taktes B in Abhängigkeit von dem Phasendifferenzen P, um einen Taktimpuls S für das nächste von der gleichen vorgegebenen Station übertragene Paket zu erzeugen.

2. Schaltkreis nach Anspruch 1, dadurch gekennzeichnet, daß der Phasendifferenzdetektorschaltkreis (2) folgende Bestandteile aufweist:

a) einen Phasenkomparator (21), der eine voreilendes Signal C und ein nacheilendes Signal D entsprechend der positiven bzw. negativen Phasendifferenz zwischen dem Eingangssignal A des Schaltkreises und dem Ausgangssignal B des Oscillators (3) erzeugt,
b) einen Oszillator (24), dessen Ausgangsfrequenz $f_2$ ein ganzzahliges Vielfaches $N_1 \cdot f_1$ der Frequenz $f_1$ des Oszillators (3) ist, und

c) zwei Torschaltungen (22) und (23) mit Ausgangssignalen F bzw. G, deren Impulszahl proportional zu den nacheilenden bzw. voreilenden Intervallen des Signals A gegenüber dem Signal B ist.

3. Schaltkreis nach Anspruch 1 oder 2, dadurch gekennzeichnet, daß der Mittelungsschaltkreis (4) zwei Vorwärts-Rückwärts-Zähler (41 und 42) aufweist, wobei

a) der erste Zähler (42) eine Periode $N_1$ und
b) der zweite Zähler (41) eine Periode $N_2$ aufweist, wobei $N_2$ die zu mittelnde Anzahl der Taktperioden ist.

4. Schaltkreis nach einem der Ansprüche 1 bis 3, dadurch gekennzeichnet, daß der Phasenschiebeschaltkreis (7) folgende Bestandteile aufweist:

a) einen Oszillator (72) mit im wesentlichen der gleikhen Frequenz wie der Oszillator (24),
b) einen Zähler (72) mit einer Periode $N_1$ und
c) einen Koinzidenzschaltkreis (73), der ein Ausgangssignal S erzeugt, wenn ein Signal P vom Speicherschaltkreis (6), das die gespeicherte Phasendifferenz des vorangehenden Pakets von der gleichen Station als ankommendes Paket repräsentiert, mit dem Signal R koinzidiert, das die nacheilende Größe vom Ausgangssignal B des Oszillators (3) repräsentiert.

**Revendications**

1. Système de récupération d'horloge pour système à accès multiples et répartition dans le temps, comprenant:

a) un oscillateur (3) pour produire une horloge locale B ayant une fréquence sensiblement égale aux fréquences d'horloge des salves transmises par divers postes d'émission dans le système à accès multiples et répartition dans le temps;
b) un circuit de détection de différence de phase (2) pour comparer la phase de l'horloge locale B à la phase de l'horloge A extraite de chacune des salves;
c) un circuit de formation de moyenne (4) pour la formation
c) un circuit de formation de moyenne (4) pour la formation de la moyenne des différences de phase détectées F et G pendant un intervalle désigné par un signal de commande H, caractérisé par:

d) un circuit de mémoire (6) pour stocker les différences de phase moyennes J sous des adresses 1—n qui identifient individuellement n postes d'émission dans le système, n étant un entier positif;

e) un circuit de commande (5) répondant à l'horloge locale B pour produire le signal de commande H et les adresses 1—n et pour lire les différences de phase stockées P dans la zone de mémoire du circuit de mémoire (6), la zone de mémoire correspondant à l'une des salves transmises par un poste donné quelconque; et

f) un circuit de déphasage (7) pour le déphasage de l'horloge locale B, en réponse aux différences de phase P, de manière à fournir une impulsion d'horloge S pour la salve suivante transmise par ledit poste,

2. Circuit selon la revendication 1, caractérisé en ce que le circuit de détection de différence de phase (2) comprend:

a) un comparateur de phase (21) produisant un signal en avance C et un signal en retard D correspondant à la différence de phase positive ou négative, respectivement, entre le signal d'entrée du circuit A et le signal de sortie B de l'oscillateur (3);

b) un oscillateur (24) avec une fréquence de sortie $f_2$ qui est un multiple entier $N_1 \cdot f_1$ de la fréquence $f_1$ de l'oscillateur (3); et

c) deux portes (22) et (23) avec des sorties F et G, respectivement, où le nombre des impulsions des sorties F et G est proportionnel aux intervalles de retard et d'avance du signal A en fonction du signal B, respectivement.

3. Circuit selon la revendication 1 ou 2, caractérisé en ce que le circuit de formation de moyenne (4) comprend deux compteurs-décompteurs (41) et (42) où

a) le premier compteur (42) a une période $N_1$; et

b) le second compteur (41) a une période $N_2$, $N_2$ étant le nombre de rythmages d'horloge dont il faut faire la moyenne.

4. Circuit selon l'une des revendications 1 à 3, caractérisé en ce que le circuit de déphasage (7) comprend:

a) un oscillateur (71) ayant sensiblement la même fréquence que l'oscillateur (24);

b) un compteur (72) avec une période $N_1$; et

c) un circuit de coïncidence (73) produisant un signal de sortie S, si un signal P en provenance du circuit de mémoire (6) représentant la différence de phase stockée de la salve précédente provenent du même poste que la salve d'entrée coïncide avec un signal R représentant la valeur du retard provenant de la sortie B de l'oscillateur (3).

FIG. 1

FIG. 2

LEAD REGION | LAG REGION

A    B    A(LAG)

B    A(LAG)

C    A(LEAD)

→ t

FIG. 3

FIG 4.